# EUROPÄISCHE PATENTSCHRIFT

(11) **EP 1 057 696 B1**
(45) Veröffentlichungstag und Bekanntmachung des Hinweises auf die Patenterteilung: **10.11.2004**
(21) Anmeldenummer: 00110419.9
(22) Anmeldetag: 16.05.2000
(51) Int. Cl.: B60R 21/13

(54) **Überroll-Schutzsystem für Kraftfahrzeuge**
Roll-over protection device for motor vehicles
Dispositif à arceau de sécurité pour véhicules

(30) Priorität: 04.06.1999 DE 19925520
(43) Veröffentlichungstag der Anmeldung: 06.12.2000
(73) Patentinhaber: ISE Innomotive Systems Europe GmbH, 51702 Bergneustadt (DE)
(72) Erfinder: Schulte, Michael, 57462 Olpe (DE); Nass, Michael, 51702 Bergneustadt (DE)
(74) Vertreter: Fuchs Mehler Weiss & Fritzsche

(56) Entgegenhaltungen:
- EP-A- 0 608 794
- EP-A- 0 657 328
- DE-A- 3 922 509

## Beschreibung

Die Erfindung bezieht sich auf ein Überroll-Schutzsystem für Kraftfahrzeuge, das jeweils einem Kraftfahrzeug-Sitz zugeordnet ist.

Überroll-Schutzsysteme, die in mannigfaltigen Ausführungsformen bekannt geworden und auch auf dem Markt sind, sollen typischerweise die Insassen von Cabriolets im Falle eines Überschlages vor einem Aufprall des Körpers auf die Fahrbahn bzw. den Erdboden schützen. Sie sind bei einer typischen Ausführungsform direkt hinter den Fahrzeugsitzen angeordnet und weisen einen Überrollkörper auf, der im Normalzustand, gegen die Kraft einer Feder vorgespannt, von einer Kassette aufgenommen wird, und im Gefahrenfall, ausgelöst durch entsprechende Sensoren am Fahrzeug, sehr schnell in eine schützende Endposition gefahren wird. Neben vorgespannten Federn als Energiespeicher und Schnellantrieb kommen auch andere Systeme in Betracht, wie beispielsweise pyrotechnische Antriebe, hydraulische oder pneumatische Systeme, aber auch hochdrehende elektromotorische Spindelantriebe oder dergleichen.

Derartige Überroll-Schutzsysteme weisen typischerweise eine Verriegelungsanordnung, eine Sperre, gegen eine ungewollte Einwärtsbewegung des ausgefahrenen Überrollbügels auf. Diese Verriegelung besteht typischerweise aus einer fahrzeugfest angebrachten Zahnstange und einer am Überrollkörper angebrachten, federbelasteten Sperrklinke, die mit der Zahnstange derart im Wirkeingriff steht, daß sie bei einer Ausfahrbewegung über die Zähne der Zahnstange "ratscht" und eine Einwärtsbewegung durch eine Sperrlage zwischen den Zähnen verhindert.

Diese Sperrklinke weist ein Betätigungselement auf, durch welches die Sperrklinke manuell außer Wirkeingriff mit den Zähnen der Zahnstange gebracht werden kann, so daß bei einem gewollten Einführen des Überrollkörpers, z.B. nach einer Fehlauslösung, diese Bewegungsrichtung entsperrt werden kann.

Es sind Überroll-Schutzsysteme für Kraftfahrzeuge bekannt (DE 39 27 265 C2 und DE 39 22 509 C2), die neben dem Schnellantrieb für den Überrollfäll einen kontinuierlich verstellbaren Antrieb für ein kontinuierliches Ein- und Ausfahren des Überrollbügels, einen sogenannten Komfortantrieb, besitzen. Ein derartiges Antriebssystem wird typischerweise immer dann vorgesehen, wenn mit dem Überrollkörper eine Kopfstütze verbunden ist, die, angepaßt an die Körperlänge des Insassen, in ihrer Höhe stufenlos verstellbar sein soll.

Um eine kontinuierliche Ein- und Ausfahrbewegung des Überrollbügels zu gewährleisten, muß die Sperrklinke während der Fahrbewegung außer Wirkeingriff mit der Zahnstange sein. Bei einer Einfahrbewegung muß grundsätzlich die ansonsten gesperrte Bewegungsrichtung freigegeben sein, wogegen eine Ausfahrbewegung grundsätzlich möglich wäre, jedoch soll auch bei dieser Bewegung die Sperrklinke außer Wirkeingriff mit der Zahnstange sein, weil zum einen das "Hinwegratschen" der Sperrklinke über die Zähne unangenehme Geräusche verursacht und zum anderen auch ein unnötiger Verschleiß in der Verklinkung entsteht. Zum anderen soll jedoch aus Sicherheitsgründen, wenn die kontinuierliche Verstellung die obere Endposition des Überrollkörpers erreicht hat, die Sperrklinke in Wirkeingriff mit der Zahnstange kommen.

Gemäß dem Stand der Technik ist für das Entklinken der Sperrklinke ein gesonderter Antrieb vorgesehen, der typischerweise aus einem kleinen Hydraulikzylinder besteht, der von der Bordhydraulik gespeist wird. Dieser Antrieb gewährleistet auch das Verklinken in der oberen Endstellung, indem er abgeschaltet wird, wenn die kontinuierliche Ausfahrbewegung beendet ist sowie wenn während einer kontinuierlichen Verfahrbewegung der Überschlagsensor den Überrollkörper auslöst. Neben dem zusätzlichen Antrieb muss daher auch eine entsprechende relativ aufwendige Steuerung vorgesehen sein.

Es ist auch bekannt, das eingangs bezeichnete Überroll-Schutzsystem für Kraftfahrzeuge so auszubilden, dass dieser zusätzliche Antrieb mit der zugehörigen Steuerung entbehrlich ist. So zeigt die EP-A-0 608 794 ein Überroll-Schutzsystem für Kraftfahrzeuge, das jeweils einem Fahrzeugsitz zugeordnet ist, mit
- einem äußeren, fahrzeugfest anbringbaren Führungskörper,
- einem inneren, in dem Führungskörper verfahrbar gehalterten Überrollkörper,
- einer entsperrbaren Verriegelungseinrichtung für ein ungewolltes Einfahren des Überrollkörpers, mit einem ersten, fahrzeugfest angebrachten Verriegelungselement und einem zweiten, entsperrbar an dem Überrollkörper angebrachten Verriegelungselement,
- einem im Gefahrenfall aktivierbaren Aktuator mit einem Auslösesystem, das in lösbarer Wirkverbindung mit einem an dem Überrollkörper angebrachten Haltekörper steht,
- einem ersten Schnellantrieb in Form einer Antriebs-Druckfeder für das Ausfahren des Überrollkörpers in eine obere verriegelte Schutz-Endstellung im Gefahrenfall,
- einer zweiten Antriebsanordnung für ein kontinuierliches Verfahren des Überrollkörpers, bestehend aus einer Elektromotor/Getriebeanordnung mit einer Gewindespindel, und
- einem verfahrbar verschiebbar gegenüber dem Überrollbügel angeordneten Steuerglied, das im Wirkeingriff mit dem zweiten Verriegelungselement steht, derart, daß beim kontinuierlichen Verfahren des Überrollkörpers die Verriegelungsanordnung entsperrt ist und nach dem Auftreffen des Überrollkörpers in seiner oberen Endstellung die Entsperrung selbsttätig aufhebbar, sowie daß beim Reversieren des in die obere Endstellung ausgefahrenen Überrollkörpers die Verriegelungsanordnung wieder selbsttätig entsperrbar ist.

Der Erfindung liegt die Aufgabe zugrunde, ausgehend von dem vorstehend bekannten Überroll-Schutzsystem dieses so auszubilden, daß beim kontinuierlichen Verfahren die Antriebs-Druckfedern unbeeinträchtigt bleiben sowie für die Zwangssteuerung der Verriegelungseinrichtung eine einfache Konstruktion möglich ist.

Die Lösung dieser Aufgabe gelingt gemäß der Erfindung dadurch, daß eine im Führungskörper verfahrbar gehalterte Traverse, auf welcher sich das untere Ende der Antriebs-Druckfeder abstützt und auf welcher der Aktuator mit seinem Auslösesystem befestigt ist, vorgesehen ist, sowie welche in Antriebs-Wirkverbindung mit der zweiten Antriebsanordnung steht und daß das Steuerglied in Form einer Steuernocke axial verschiebbar gegenüber dem Überrollkörper mit der Traverse gekoppelt ist.

Durch die erfindungsgemäße Ausbildung des Überroll-Schutzsystems ist es ebenfalls möglich, mit nur einem Antrieb die kontinuierliche Aufstellbewegung, einschließlich des Reversierens, und das Verriegeln des Überrollkörpers in der ausgefahrenen Stellung selbstätig zwangsgesteuert mit den kontinuierlichen Verfahrbewegungen durchzuführen. Dabei bleiben jedoch die Antriebs-Druckfedern bei der üblichen kontinuierlichen Aufstellbewegung unbeeinträchtigt. Ferner erfolgt die selbsttätige Zwangssteuerung mit einer relativ einfachen Konstruktion.

Für die Zwangssteuerung der Verriegelung durch die Steuernocke abhängig von den kontinuierlichen Verfahrbewegungen sind verschiedene Möglichkeiten denkbar.

Eine vorteilhafte Ausführungsform ist gegeben, wenn die Steuernocke fest an einem Auslöseschieber angebracht ist, der eine Antriebsmutter für den Wirkeingriff mit der Gewindespindel besitzt, und der federbelastet in der Traverse relativ zu dieser verschiebbar gehaltert ist
Bei einer derartigen Ausbildung gewährleistet die Verschiebbarkeit der Steuernocke gegenüber der Traverse, die im nicht ausgelösten Zustand fest mit dem Überrollkörper verbunden ist, die Zwangssteuerung der Verriegelung.

Eine alternative Ausführungsform ist möglich, wenn die Traverse eine Gewindebohrung für den Wirkeingriff mit der Gewindespindel besitzt, die Steuernocke fest an der Traverse angebracht ist und der Verriegelungskörper federbelastet verschiebbar in dem Überrollkörper gehaltert ist. Bei dieser Ausführungsform gewährleistet die Verschiebbarkeit des fest an der Traverse angebrachten Steuernockens gegenüber dem Überrollkörper die Zwangssteuerung der Verriegelung, insbesondere das Verriegeln des Überrollkörpers in seiner ausgefahrenen Endstellung.

Zur Begrenzung der Relativbewegung des Auslöseschiebers gegen die Traverse ist vorzugsweise an der Traverse ein Anschlag angebracht. An dem Auslöseschieber ist ferner ein Anschlag für die Mitnahme der Traverse bei einer Einfahrbewegung des Überrollkörpers ausgebildet. Auch dieser Anschlag ist ein Teil der Zwangssteuerung.

Die Anordnung einer Kopfstütze kann gemäß einer ersten Ausgestaltung der Erfindung so getroffen sein, daß am oberen Teil des Überrollkörpers ein eine Kopfstütze bildendes Kopfstützenpolster angeformt ist.

Eine alternative Ausführungsform ist so ausgebildet, daß neben dem Überrollkörper parallel zu diesem mindestens ein weiterer langgestreckter, in dem äußeren Führungskörper geführter Formköper auf der Traverse befestigt ist, an dem im oberen Bereich insassenzugewandt vor dem inneren Überrollkörper ein die Kopfstütze bildendes Kopfstützenpolster angeformt ist.

Vorzugsweise ist der Schnellantrieb durch eine vorgespannte Antriebs-Druckfeder gebildet, die sich mit einem, dem oberen Ende am Überrollkörper abstützt und die mit ihrem anderen, unterem Ende mit der Traverse in fester Verbindung steht. Dabei kann das untere Ende der Antriebsdruckfeder an dem Aktuator, der an der Traverse fest angebracht ist, oder direkt an der Traverse befestigt sein.

Auch für die Verriegelung des Überrollkörpers in seiner ausgefahrenen Stellung bestehen verschiedene Möglichkeiten. Eine vorteilhafte Weiterbildung gemäß der Erfindung ist gegeben, wenn an dem Überrollkörper über eine Welle eine Verriegelungsklinke mit Zahnprofil angelenkt ist, die ein Befestigungselement für den Wirkeingriff mit den Steuernocken aufweist, und wenn im Inneren des äußeren Führungskörpers eine Zahnstange vorgesehen ist.

Für die Ausbildung des Überrollkörpers und des äußeren Führungskörpers und deren Anordnung bestehen verschiedene Möglichkeiten. Gemäß einer ersten Weiterbildung sind sowohl der Überrollkörper als auch der äußere Führungskörper kreisbogenförmig gekrümmt und der äußere Führungskörper hinter dem Fahrzeugsitz, vorzugsweise an der Fahrzeugrückwand, befestigt.

Auch eine lineare Ausbildung der Bewegungsbahn und der zugehörigen Körper ist denkbar.

Gemäß einer anderen Ausgestaltung der Erfindung sind sowohl der Führungskörper als auch der Überrollkörper als Kastenprofile ausgebildet.

Weitere ausgestaltende Merkmale und Vorteile der Erfindung ergeben sich anhand der Beschreibung von zwei in den Zeichnungen dargestellten Ausführungsbeispielen.

Es zeigen:
- Figur 1: in einer schematischen Längsschnitt-Darstellung den prinzipiellen Aufbau des erfindungsgemäßen Überroll-Schutzsystems in der eingefahrenen Grundposition,
- Figur 2: das Überroll-Schutzsystem nach Figur 1 bei vollständig kontinuierlich ausgefahrenem Überrollkörper,
- Figur 3: eine Darstellung entsprechend Figur 2 mit der zwangsgesteuerten Verklinkung in der kontinuierlich ausgefahrenen Endstellung des Überrollkörpers durch den kontinuierlichen Antrieb,
- Figur 4: eine Darstellung des Überroll-Schutzsystems nach Figur 1 bei durch den Schnellantrieb ausgefahrener Stellung des Überrollkörpers mit verriegelter Sperrklinke,
- Figur 5: eine Darstellung entsprechend Figur 4 mit Beginn der Reversierbewegung durch den kontinuierlichen Antrieb,
- Figur 6: eine Darstellung entsprechend Figur 5 in der Position, in der ein Steuernocken mit der Verriegelung in Wirkeingriff tritt,
- Figur 7: eine Darstellung entsprechend Figur 6 bei Beginn der Abwärtsbewegung des kontinuierlichen Antriebes,
- Figur 8: eine Darstellung des Überroll-Schutzsystems entsprechend Figur 7 in einer Position, in der der Steuernocken die Verriegelung entsperrt und die reversierende Abwärtsbewegung des Überrollkörpers freigibt, und
- Figur 9: eine zweite Ausführungsform der Erfindung, bei der die Relativbewegung zwischen dem Steuernocken und dem Überrollkörper durch einen federbelastet verschiebbar gehaltenen Verriegelungsbolzen gewährleistet wird.

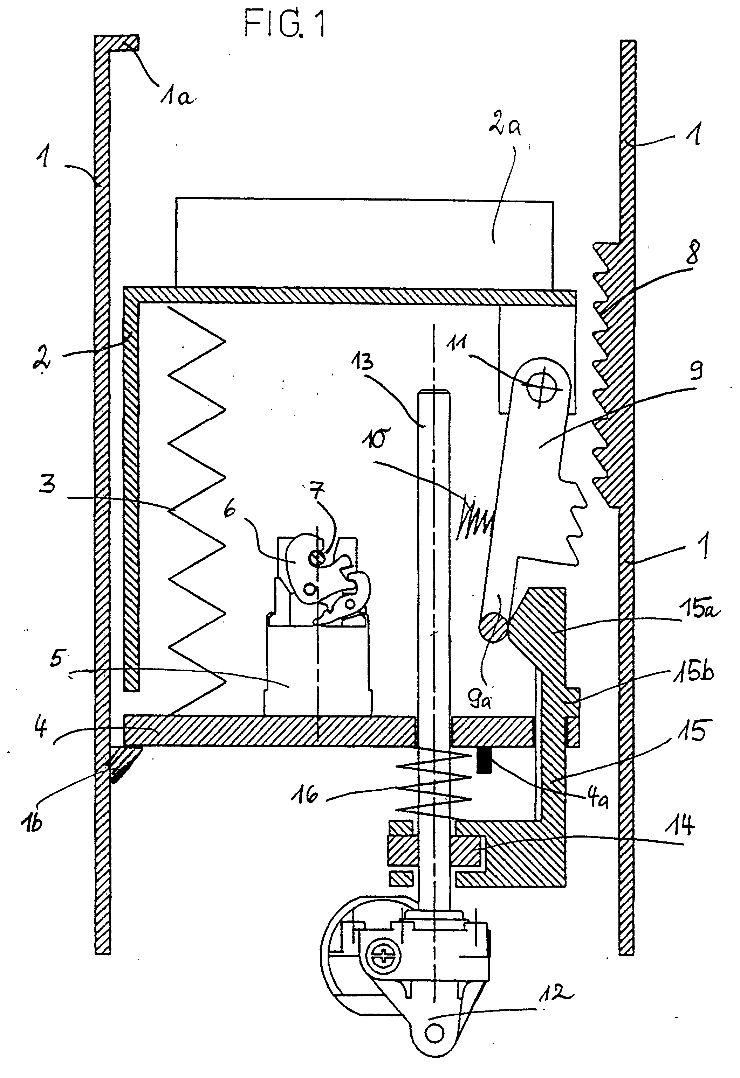

Die Figur 1 zeigt das Prinzip des erfindungsgemäßen Überroll-Schutzsystems in schematischer Darstellung. Es besteht aus einem karrosseriefesten Teil 1, das in einer Kassettenbauweise durch eine Außenkassette gebildet wird, und einem beweglichen, gradlinig oder auf einer Kurvenbahn ausfahrendem Teil 2, der Innenkassette, bzw. dem Überrollkörper, der durch einen Überrollbügel oder durch einen Profilkörper der unterschiedlichsten Gestalt gebildet werden kann. An diesem Überrollkörper 2 ist eine Kopfstütze 2a integriert, die ebenfalls nur schematisch angedeutet ist.

Die Ausbildung des karrosseriefesten Teiles 1 und des ausfahrbaren Teiles 2 sind in mannigfaltigen Ausführungsformen bekannt geworden, so daß an dieser Stelle eine schematische Darstellung genügt.

Zum Schnellausfahren im Überrollfall ist eine Druckfeder, die Antriebsfeder 3 vorgesehen, die sich oben am Überrollkörper 2 und unten auf einer Traverse 4 abstützt, die später noch näher beschrieben wird. Auf der Traverse 4 ist ein Aktuator 5 fest angeordnet, der in nicht dargestellter Weise mit einem Sensor verbunden ist, der einen Überschlag erfaßt, und der ein Auslösesystem 6 in Form eines bekannten Doppelbebels besitzt, wobei der eine Hebel (Verriegelungshebel) einen Verriegelungsbolzen 7 umfaßt, der mit dem Überrollkörper 2 fest verbunden ist. Wird der Aktuator 5 ausgelöst, so gibt der Verriegelungshebel des Auslösesystem 6 den Verriegelungsbolzen 7 frei, wodurch der Überrollkörper 2 durch die Kraft der vorgespannten Antriebsfeder 3 nach oben in die schützende Endstellung schnellt.

Zur Verriegelung der ausgefahrenen Schutzstellung ist an dem karrosseriefesten Teil 1 eine Zahnstange 8 vorgesehen, die mit einer Sperrklinke 9 im Wirkeingriff steht, die mittels einer Druckfeder, der Klinkerfeder 10, federvorbelastet ist und die an dem Überrollkörper 2 um eine Achse 11 schwenkbar angelenkt ist.

In der Normalstellung, d.h. in der in Figur 1 dargestellten eingefahrenen Position bilden der Überrollkörper 2 mit der Sperrklinke 9, die Traverse 4, der Aktuator 5 und die vorgespannte Antriebsfeder 3 eine Einheit.

Wenn, wie dargestellt, an dem Überrollkörper 2 eine Kopfstütze 2a integriert ist, so wird häufig von den Automobilbauern eine kontinuierliche Aufstellbewegung des Überrollkörpers 2 und damit der Kopfstütze 2a verlangt. Zu diesem Zweck ist ein kontinuierlich arbeitender Motor 12 mit einer Spindel 13 vorgesehen. Dieser Motor ist typischerweise ein über die Bordelektronik ansteuerbarer Elektromotor. Die Spindel 13 steht im Wirkeingriff mit einer Spindelmutter 14, die in einem Auslöseschieber 15 gehaltert ist. Die Ausbildung und die Funktion dieses Auslöseschiebers wird später noch näher erläutert werden. Die Gewindespindel 13 durchdringt die Traverse 4 in einer gewindelosen Bohrung, wobei zwischen dem Auslöseschieber 15 und der Traverse 4 eine Druckfeder, die Spindelfeder 16, vorgesehen ist.

Das in Figur 1 dargestellte System besitzt mehrere Anschläge, nämlich einen Anschlag 1a an der Außenkassette 1 für eine Begrenzung der Ausfahrbewegung des Überrollkörpers 2, einen Anschlag 1b an der Außenkassette 1 für eine Begrenzung der Bewegung der Traverse 4 nach unten, einen Anschlag 4a an der Traverse 4 zur Begrenzung der Bewegung des Auslöseschiebers 15 in bezug auf die Traverse 4 sowie einen Anschlag 15b an dem Auslöseschieber 15 für eine Begrenzung der Bewegung des Auslöseschiebers 15 nach unten.

Der Auslöseschieber 15 besitzt weiterhin einen nockenartigen Ansatz 15a, der im Wirkeingriff mit dem bereits eingangs erwähnten Betätigungselement 9a der Sperrklinke 9 steht, das ein manuelles Entklinken erlaubt. Durch den nockenartigen Ansatz 15a des Auslöseschiebers 15 kann die Sperrklinke 9 ebenfalls außer Wirkeingriff mit der Zahnstange 8 gebracht werden (wie dargestellt). Ist die Verbindung zwischen dem nockenartigen Ansatz 15a und der Sperrklinke 9 aufgehoben, dann wird die Sperrklinke 9 durch die Kraft der Klinkenfeder 10 in Wirkeingriff mit der Zahnstange 8 gebracht.

Das in der Figur 1 in der eingefahrenen Position dargestellte Überroll-Schutzsystem für Kraftfahrzeuge arbeitet wie folgt:

Durch eine Drehbewegung der Spindel 13 aufgrund der Betätigung des Motors 12 bewegt sich die Spindelmutter 14 mit dem Auslöseschieber 15 aufwärts. Dabei hebt sie über die Spindelfeder 16, die zwischen der Traverse 4 und dem Auslöseschieber 15 eingespannt ist, den Überrollkörper 2 an. Die Kraft der Antriebsfeder 3 ist dabei wesentlich größer als die Kraft der Spindelfeder 16. Die Kraft der Spindelfeder 16 wiederum ist größer als die Gewichtskraft des Überrollkörpers 2 einschließlich der der Aufwärtsbewegung entgegenstehenden Reibkraft. Die Sperrklinke 9 ist durch den nockenartigen Ansatz 15a entklinkt, so daß der Überrollkörper 2 frei nach oben und unten verfahren werden kann.

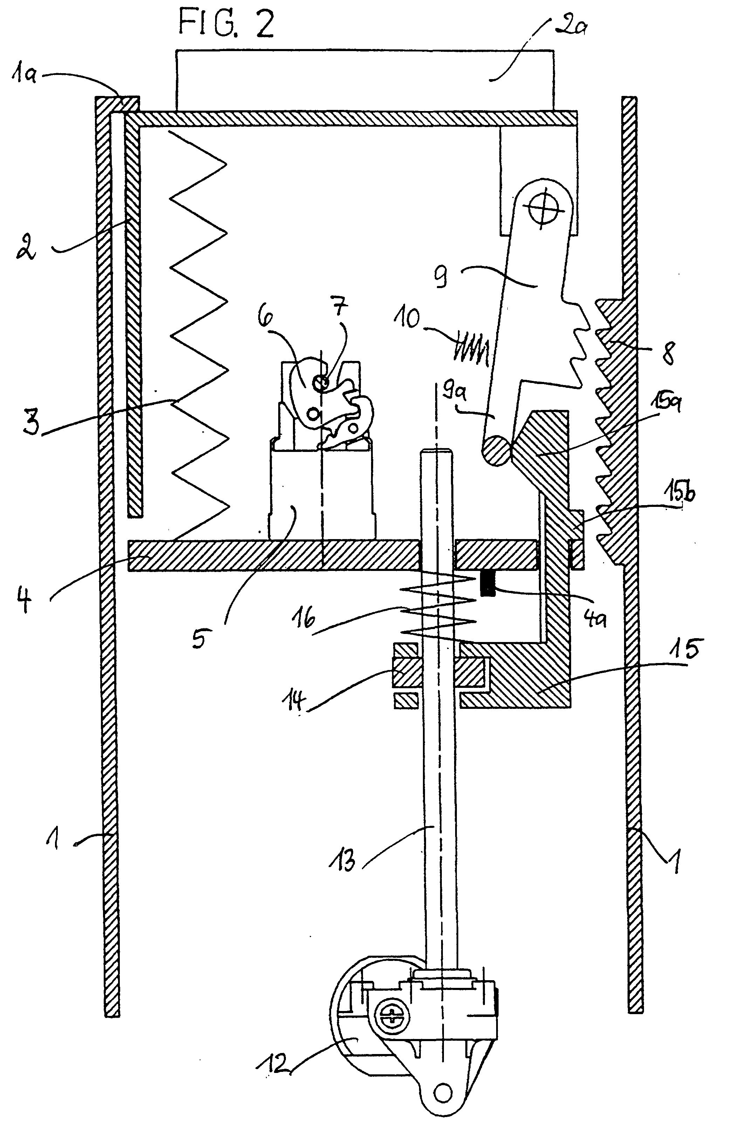

Die Figur 2 zeigt dabei die Position nach einer Aufstellbewegung, bei der der Überrollkörper 2 an dem oberen Anschlag 1a der Außenkassette angelangt ist. In diesem Zustand ist der Überrollkörper 2 mit dem Verriegelungsbolzen 7 in dem Auslösesystem 6 noch verriegelt und die Sperrklinke 9 ist weiterhin außer Wirkeingriff mit der Zahnstange 8.

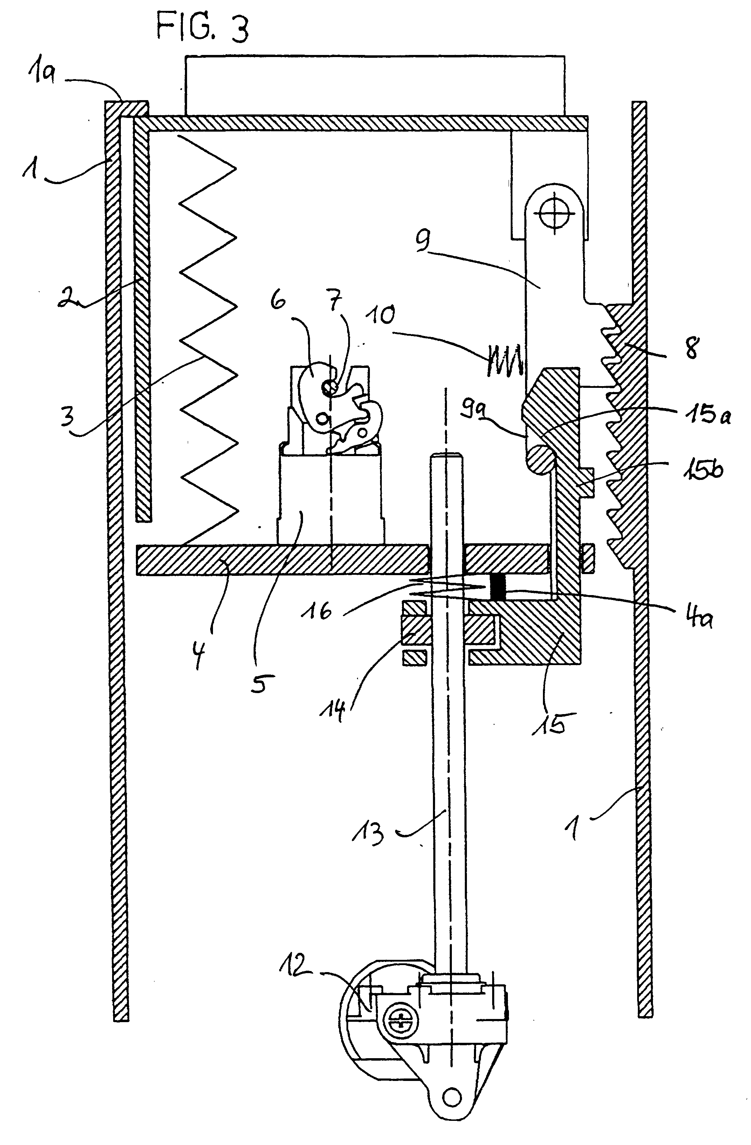

Da der Überrollkörper 2 am Anschlag 1a der Außenkassette 1 angelangt ist, kann er sich selbst nicht weiter nach oben bewegen. Jedoch kann sich die Spindelmutter 14 durch Komprimieren der Spindelfeder 16 relativ zur Traverse 4 weiterbewegen. Dabei wird auch der Auslöseschieber 15 relativ zu der Traverse 4 nach oben bewegt und gibt über die untere Schräge des nockenartigen Ansatzes 15a die Sperrklinke 9 frei, wodurch diese mittels der Klinkenfeder 10 in Wirkeingriff mit der Zahnstange 8 gelangt. Dieser Zustand der Verriegelung in der ausgefahrenen Stellung ist in der Figur 3 dargestellt, wobei der Anschlag 4a an der Traverse 4 die Aufwärtsbewegung des Auslöseschiebers 15 relativ zur Traverse 4 begrenzt.

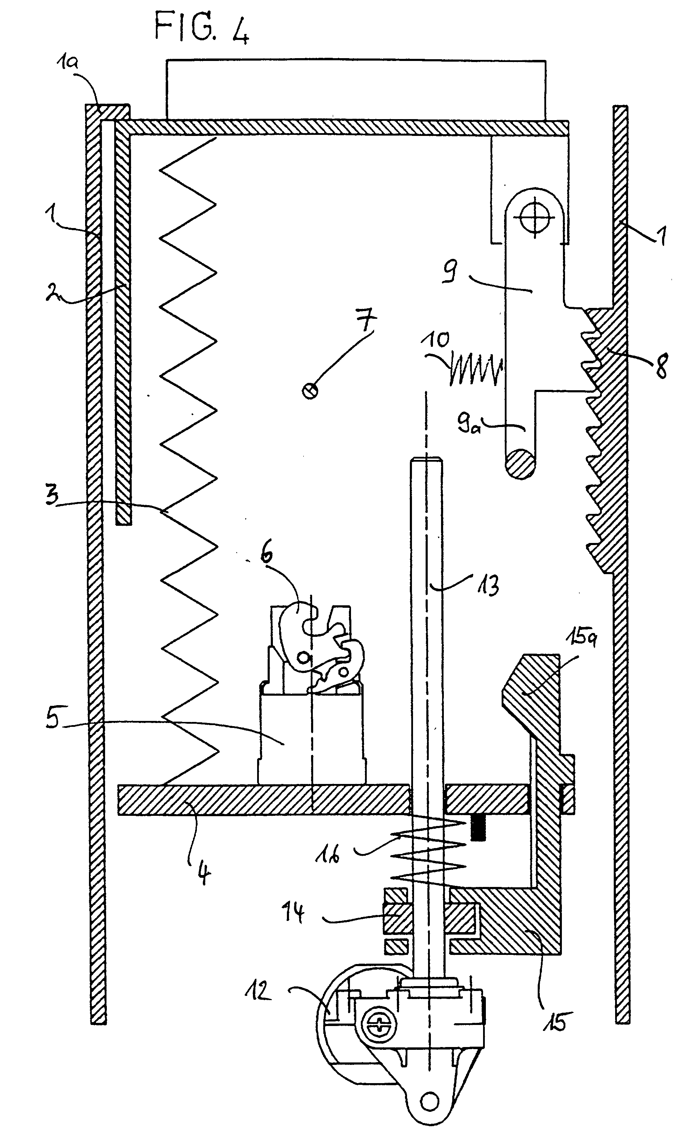

Die Figur 4 zeigt die Position des Überrollkörpers 2 nach einer Crashauslösung aus der untersten Stellung, wie sie in der Figur 1 dargestellt ist. Nach einem entsprechenden Impuls des Überschlagsensors gibt die Verriegelungsklinke 6 des Auslösesystems des Aktuators 5 den Verriegelungsbolzen 7 frei. Der Überrollkörper 2 wird dann, angetrieben von der vorgespannten Antriebsfeder 3, aus der Außenkassette 1 herausgefahren, bis der Überrollkörper 2 am Anschlag 1a anlangt. Da die Traverse 4 und der Auslöseschieber 15 in der unteren Stellung verbleiben und die Sperrklinke 9 am Überrollkörper 2 angebracht ist, wird der Wirkeingriff zwischen dem Betätigungselement 9a der Sperrklinke 9 und dem nockenartigen Fortsatz 15a des Auslöseschiebers 15 gelöst, wodurch die Klinkenfeder 10 die Sperrklinke 9 in Wirkeingriff mit der Zahnstange 8 bringt. Der Überrollkörper 2 ist damit gegen ein Eindrücken beim Überschlag gesperrt, in gleicher Weise wie bei der Position nach Figur 3, bei der der Überrollkörper 2 aufgrund einer kontinuierlichen Verstellbewegung seine oberste Position erreicht hat.

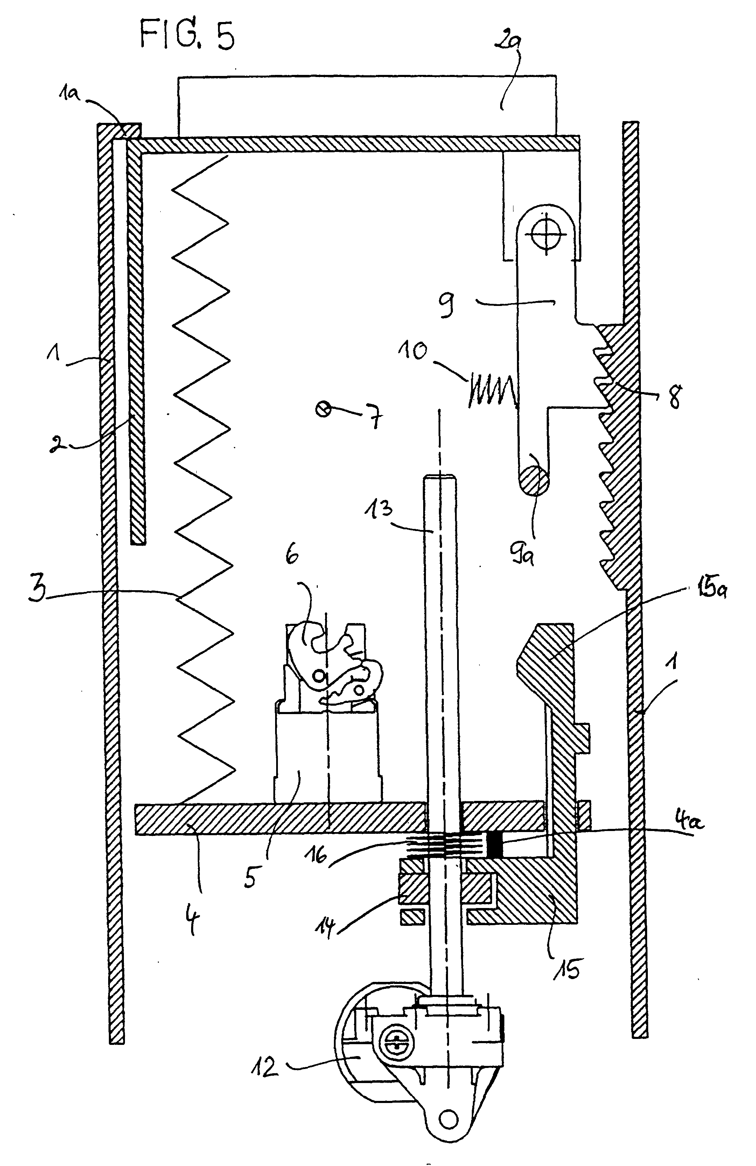

Die Figuren 5 bis 7 zeigen verschiedene Positionen des Überrollbügels 2 bei seiner Reversierung in den Ausgangszustand nach einer Crashauslösung (Fig. 4) mittels des kontinuierlich arbeitenden Antriebes 12. Die Figur 5 zeigt dabei den Beginn der Reversierung, bei der die Traverse 4 mit dem Aktuator 5, dem Auslösesystem 6 und dem Auslöseschieber 15 nach oben gefahren wird. Da die Kraft der Antriebsfeder 3 größer ist als die Kraft der Spindelfeder 16, komprimiert sich bei einer Aufwärtsbewegung der Spindelmutter 14 zuerst die Spindelfeder 16 so lange, bis der Auslöseschieber 15 auf den Anschlag 4a an der Traverse getroffen ist. Danach wird die Antriebsfeder 3 durch die dann ebenfalls aufwärtsfahrende Traverse 4 wieder vorgespannt.

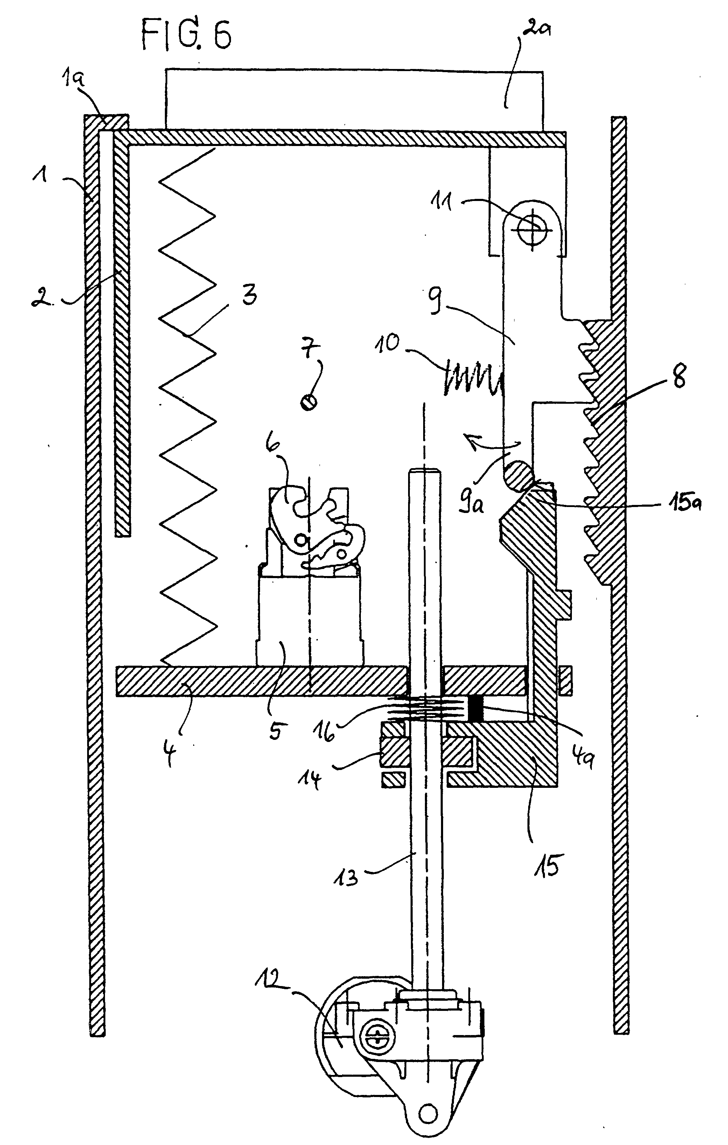

Trifft bei der weiteren Aufwärtsbewegung der Traverse 4 und des Auslöseschiebers 15 die obere Schräge des nockenartigen Ansatzes 15a des Auslöseschiebers 15 auf das Betätigungselement 9a der Sperrklinke 9, so wird die Sperrklinke 9 gegen die Kraft der Klinkenfeder 10 durch die obere Schräge am Fortsatz 15a in Pfeilrichtung verschwenkt. Dadurch werden die Sperrklinke 9 und die Zahnstange 8 wieder außer Eingriff gebracht. In der Figur 6 ist dabei der Zustand dargestellt, bei dem der Auslöseschieber 15 auf die Klinke 9 auftrifft.

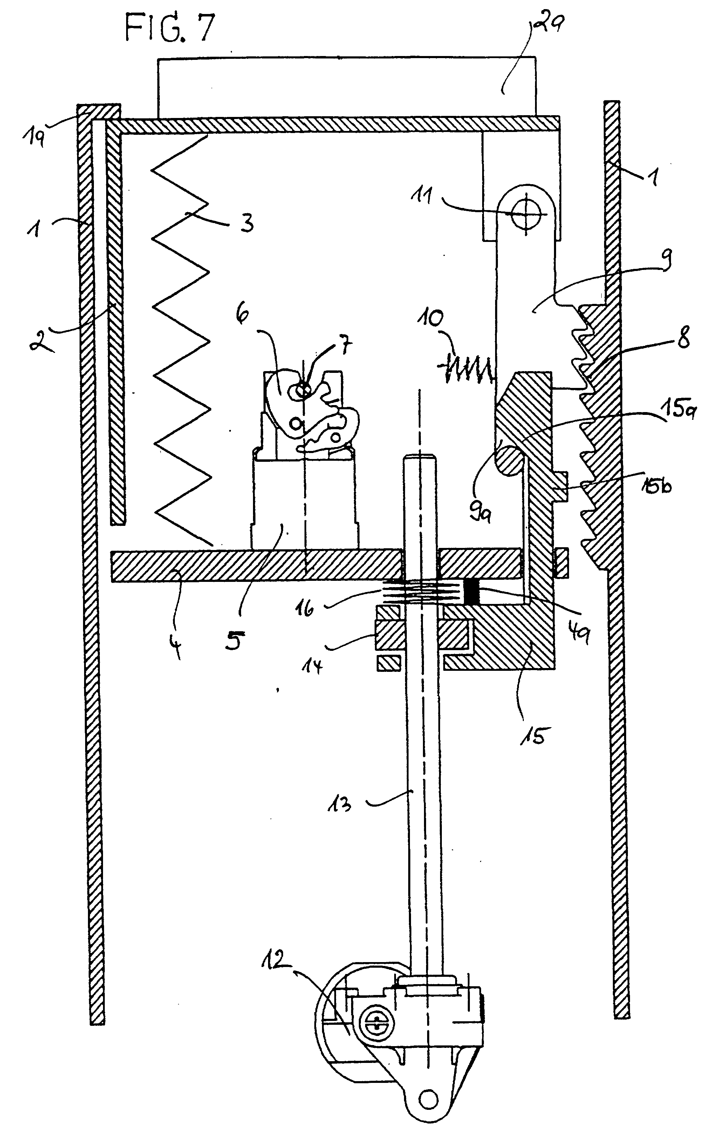

Bei der weiteren Aufwärtsbewegung der Traverse 4 mit dem Auslöseschieber 15 kuppelt die Verriegelungsklinke des Auslösesystems 6 in den Verriegelungsbolzen 7 wieder ein. Da in dieser Position das Betätigungselement 9a der Sperrklinke 9 über den Ansatz 15a hinweggerutscht ist, kommt die Sperrklinke 9 wieder in Wirkeingriff mit der Zahnstange 8. Dieser Zustand ist in der Figur 7 dargestellt. Sie entspricht der in der Figur 3 dargestellten Endstellung bei einem kontinuierlich ausgefahrenen Überrollbügel 2, in der stets aus Sicherheitsgründen die Sperre gegen ein ungewolltes Wiedereindrücken voll wirksam sein soll.

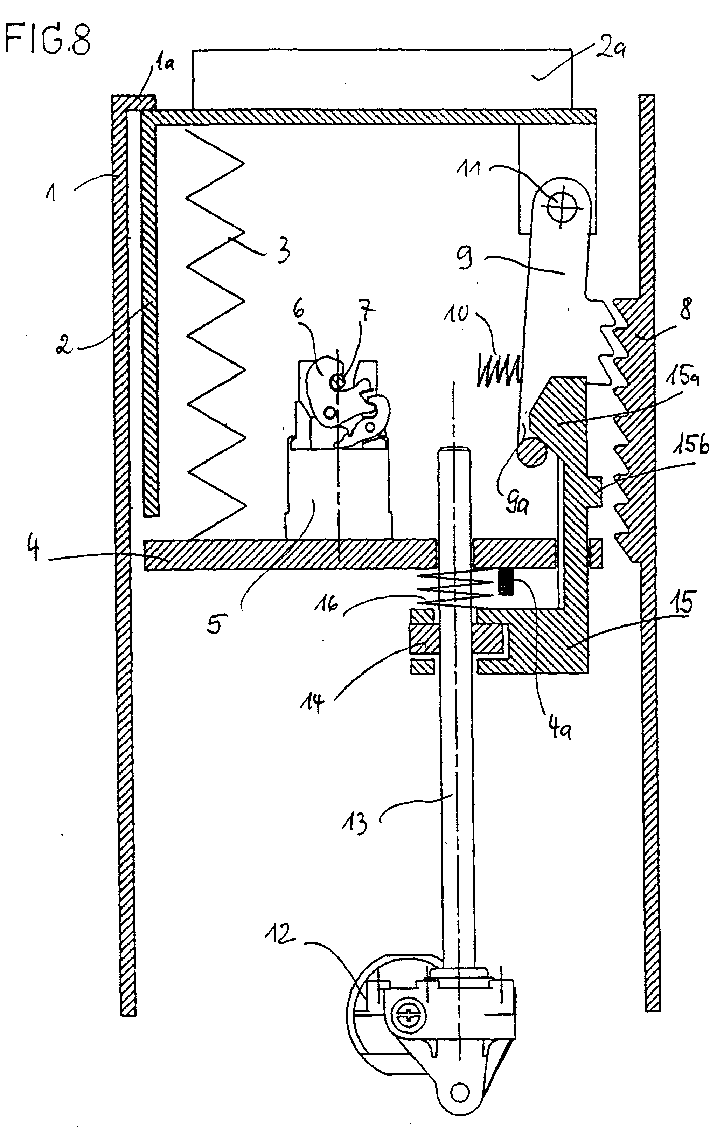

Zum kontinuierlichen Wiedereinfahren des Überrollbügels mit der Kopfstütze 2a aus der ausgefahrenen Position, sei es die Position nach Figur 3 oder nach Figur 7, wird der Motor 12 in entgegengesetzter Drehrichtung aktiviert und die Spindelmutter 14 bewegt sich dadurch abwärts. Bei der Abwärtsbewegung entspannt sich zuerst die Spindelfeder 16 und nimmt dabei den Auslöseschieber 15 mit sich, bis dieser mit seinem Anschlag 15b auf der Traverse 4 zum Anliegen kommt. Dabei öffnet die an dem Ansatz 15a des Auslöseschiebers angeformte untere Schräge durch den Wirkeingriff mit dem Betätigungselement 9a an der Sperrklinke, die Verklinkung, indem sie die Sperrklinke 9 im Uhrzeigersinn gegen die Kraft der Klinkenfeder 10 verschwenkt. Bei der weiteren Abwärtsbewegung nimmt die Traverse 4, die mit dem Aktuator 5 und dem verriegelten Überrollkörper 2 eine Einheit bildet, diese mit sich, bis wieder die Position nach Figur 1 erreicht ist. Die Figur 8 zeigt dabei die Position bei beginnender Öffnung der Sperrklinke 9, kurz bevor das Betätigungselement 9a an der Vorderfläche des nockenförmigen Ansatzes 15a zum Anliegen kommt, wie es in Figur 1 dargestellt ist.

Wie aus den vorgenannten Figuren hervorgeht, ist es durch die Erfindung möglich, mit nur einem Antrieb, nämlich dem Verstellantrieb 12, die kontinuierliche Aufstellbewegung und die zugehörige Entriegelung der Sperrklinke bzw. das Verriegeln der Sperrklinke in der ausgefahrenen Stellung durchzuführen. Es ist dabei sichergestellt, daß bei einem kontinuierlichen Verfahren des Überrollkörpers die Sperrklinke außer Eingriff mit der Zahnstange ist, und daß in jedem Fall in der oberen Endstellung die Sperrklinke wieder im Wirkeingriff mit der Zahnstange ist.

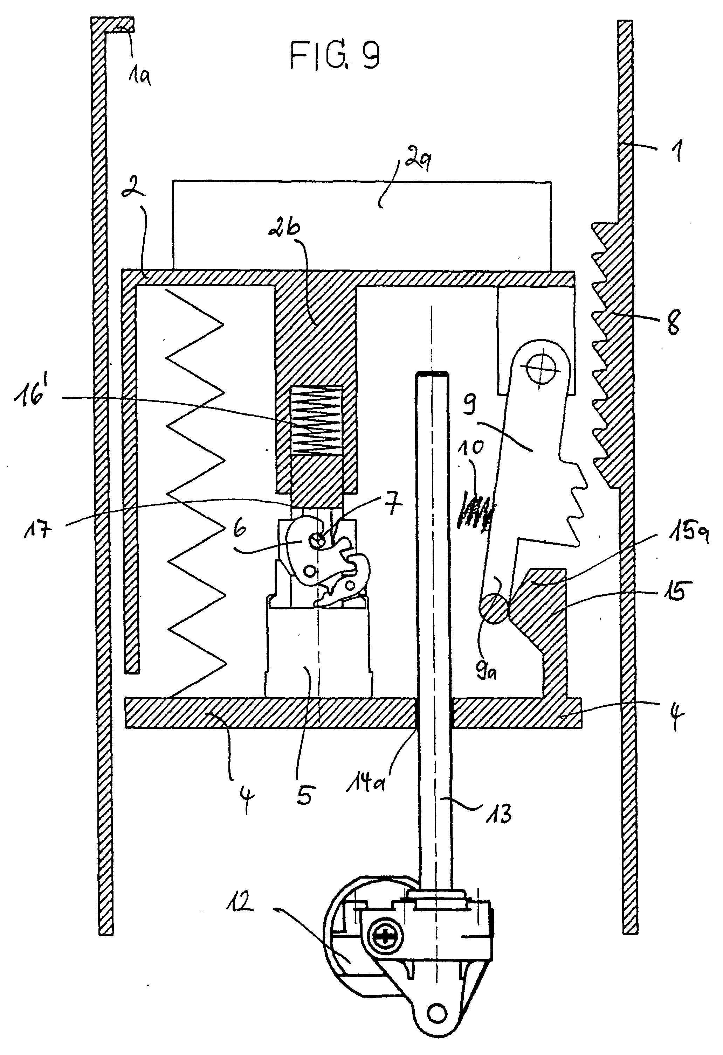

Die Figur 9 zeigt eine zweite Ausführungsform der Erfindung, bei der die Traverse 4 und der Auslöseschieber 15 fest miteinander verbunden sind und die Antriebsmutter 14 als Gewinde 14a in der Traverse 4 ausgebildet ist. Der Verriegelungsbolzen 7 ist an einem Stempel 17 befestigt, der in einer Bohrung eines Fortsatzes 2b am Überrollbügel geführt ist. In dieser Bohrung ist eine Druckfeder 16' aufgenommen, die die Funktion der Spindelfeder 16 bei der Ausführung nach den Figuren 1 bis 9 übernimmt. Die notwendige Relativbewegung zwischen dem nockenförmigen Ansatz 15a des Auslöseschiebers 15 und dem Überrollkörper 2 bei dessen Anschlag gegen den Anschlag 1a, entsprechend den Positionen in den Figuren 2 und 3, wird daher bei der Ausführung nach Figur 10 durch den federbelasteten Verriegelungsbolzen 7 bewirkt. Fährt nämlich die Traverse 4 nach dem Auftreffen des Überrollbügels 2 gegen den Anschlag 1a der Außenkassette weiterhin aufwärts, dann wird der Verriegelungsbolzen 7 mit seinem Stempel 17 weiter nach oben bewegt und drückt die Feder 16' zusammen. Dadurch gelangt entsprechend der Darstellung in Figur 3 das Betätigungselement 9a der Sperrklinke 9 unter die untere Schräge des Ansatzes 15a, so daß die Sperrklinke 9 in Wirkeingriff mit der Zahnstange 8 kommt.

Es versteht sich, daß in den beschriebenen Figuren nur, wenn auch vorteilhafte Ausführungsbeispiele dargestellt sind. Es können beispielsweise auch andere Aktuatoren, Auslösesysteme, Verriegelungen bzw. Steuernocken vorgesehen sein. Der Überrollkörper 2 sowie das karosseriefeste Teil 1, der Führungskörper, werden vorzugsweise durch einen Profilkörper gebildet.

Die Kopfstütze 2a muß auch nicht zwingend an dem Überrollkörper 2 integriert sein. Sie kann auch auf einem parallel dazu auf der Traverse 4 gehaltenen langgestreckten gesonderten Formkörper angeordnet werden.

## Patentansprüche

1. Überroll-Schutzsystem für Kraftfahrzeuge, das jeweils einem Kraftfahrzeug-Sitz zugeordnet ist, mit
- einem äußeren, fahrzeugfest anbringbaren Führungskörper (1),
- einem inneren, in dem Führungskörper (1) verfahrbar gehalterten Überrollkörper (2),
- einer entsperrbaren Verriegelungseinrichtung für ein ungewolltes Einfahren des Überrollkörpers (2), mit einem ersten, fahrzeugfest angebrachten Verriegelungselement (8) und einem zweiten, entsperrbar an dem Überrollkörper (2) angebrachten Verriegelungselement (9, 9a),
- einem im Gefahrenfall aktivierbaren Aktuator (5) mit einem Auslösesystem (6), das in lösbarer Wirkverbindung mit einem an dem Überrollkörper (2) angebrachten Haltekörper (7) steht,
- einem ersten Schnellantrieb in Form einer Antriebs-Druckfeder (3) für das Ausfahren des Überrollkörpers (2) in eine obere verriegelte Schutz-Endstellung im Gefahrenfall,
- einer zweiten Antriebsanordnung für ein kontinuierliches Verfahren des Überrollkörpers (2), bestehend aus einer Elektromotor/Getriebeanordnung (12) mit einer Gewindespindel (13), und
- einem verfahrbar verschiebbar gegenüber dem Überrollkörper (2) angeordneten Steuerglied (15 a), das im Wirkeingriff mit dem zweiten Verriegelungselementent (9, 9a) steht, derart, dass beim kontinuierlichen Verfahren des Überrollkörpers (2) die Verriegelungsanordnung entsperrt ist und nach dem Auftreffen des Überrollkörpers (2) in seiner oberen Endstellung die Entsperrung selbsttätig aufhebbar, sowie dass beim Reversieren des in die obere Endstellung ausgefahrenen Überrollkörpers (2) die Verriegelungsanordnung wieder selbsttätig entsperrbar ist,
**dadurch gekennzeichnet, daß** eine im Führungskörper (2) verfahrbar gehalterte Traverse (4), auf welcher sich das untere Ende der Antriebs-Druckfeder (3) abstützt und auf welcher der Aktuator (5) mit seinem Auslösesystem (6) befestigt ist, vorgesehen ist, sowie welche in Antriebs-Wirkverbindung mit der zweiten Antriebsanordnung (12, 13) steht und daß das Steuerglied in Form einer Steuernocke (15 a) axial verschiebbar gegenüber dem Überrollkörper mit der Traverse (4) gekoppelt ist.

2. Überroll-Schutzsystem nach Anspruch 1, **dadurch gekennzeichnet, daß** die Steuernocke (15a) fest an einem Auslöseschieber (15) angebracht ist, der eine Antriebsmutter (14) für den Wirkeingriff mit der Gewindespindel (13) besitzt, und der federbelastet in der Traverse (4) relativ zu dieser verschiebbar gehaltert ist.

3. Überroll-Schutzsystem nach Anspruch 1, **dadurch gekennzeichnet, daß** die Traverse (4) eine Gewindebohrung (14a) für den Wirkeingriff mit der Gewindespindel (13) besitzt, die Steuernocke (15a) fest an der Traverse (4) angebracht ist und der Verriegelungskörper (7) federbelastet verschiebbar in dem Überrollkörper (2) gehaltert ist.

4. Überroll-Schutzsystem nach Anspruch 2, **dadurch gekennzeichnet, daß** an der Traverse (4) ein Anschlag (4a) zur Begrenzung der Relativbewegung des Auslöseschiebers (15) gegen die Traverse (4) angebracht ist.

5. Überroll-Schutzsystem nach Anspruch 2 oder 4, **dadurch gekennzeichnet, daß** an dem Auslöseschieber (15) ein Anschlag (15b) für die Mitnahme der Traverse (4) bei einer Einfahrbewegung des Überrollkörpers (2) ausgebildet ist.

6. Überroll-Schutzsystem nach einem der Ansprüche 1 bis 5, **dadurch gekennzeichnet, daß** am oberen Teil des Überrollkörpers (2) ein eine Kopfstütze (2a) bildendes Kopfstützenpolster angeformt ist.

7. Überroll-Schutzsystem nach einem der Ansprüche 1 bis 5, **dadurch gekennzeichnet, daß** neben dem Überrollkörper (2) parallel zu diesem mindestens ein weiterer langgestreckter, in dem äußeren Führungskörper (1) geführter Formköper auf der Traverse (4) befestigt ist, an dem im oberen Bereich insassenzugewandt vor dem inneren Überrollkörper (2) ein die Kopfstütze (2 a) bildendes Kopfstützenpolster angeformt ist.

8. Überroll-Schutzsystem nach einem der Ansprüche 1 bis 7, **dadurch gekennzeichnet, daß** der Schnellantrieb durch eine vorgespannte Antriebs-Druckfeder (3) gebildet ist, die sich mit einem, dem oberen Ende am Überrollkörper (2) abstützt und die mit ihrem anderen, unteren Ende mit der Traverse (4) in fester Verbindung steht.

9. Überroll-Schutzsystem nach Anspruch 8, **dadurch gekennzeichnet, daß** das untere Ende der Antriebs-Druckfeder (3) an dem Aktuator (5) oder direkt an der Traverse (4) befestigt ist.

10. Überroll-Schutzsystem nach einem der Ansprüche 1 bis 9, **dadurch gekennzeichnet, daß** an dem Überrollkörper (2) über eine Welle (11) eine Verriegelungsklinke (9) mit Zahnprofil angelenkt ist, die ein Befestigungselement (9a) für den Wirkeingriff mit den Steuernocken (15a) aufweist, und daß im Inneren des äußeren Führungskörpers (1) eine Zahnstange (8) vorgesehen ist.

11. Überroll-Schutzsystem nach einem der Ansprüche 1 bis 10, **dadurch gekennzeichnet, daß** sowohl der Überrollkörper (2) als auch der äußere Führungskörper (1) kreisbogenförmig gekrümmt sind und der äußere Führungskörper (1) hinter dem Fahrzeugsitz, vorzugsweise an der Fahrzeugrückwand, befestigt ist.

12. Überroll-Schutzsystem nach einem der Ansprüche 1 bis 11, **dadurch gekennzeichnet, daß** sowohl der Führungskörper (1) als auch der Überrollkörper (2) als Kastenprofile ausgebildet sind.

## Claims

1. A roll-over protection system for motor vehicles that is assigned to each seat of a motor vehicle, comprising
- an outer guide body (1) which can be fixed to the vehicle,
- an inner roll-over body (2) which is movably held in the guide body (1),
- an unlockable locking device for unintentional retraction of the roll-over body (2), comprising a first locking element (8) which is fixed to the vehicle and a second locking element (9, 9a) which is mounted on the roll-over body (2) in an unlockable manner,
- an actuator (5) which can be activated in a hazardous situation, comprising a release system (6) which is in disengageable operative connection with a retaining member (7) mounted on the roll-over body (2),
- a first quick-action drive in the form of a driving pressure spring (3) for extending the roll-over body (2) into an upper, locked, protecting end position in a hazardous situation,
- a second drive arrangement for continuous movement of the roll-over body (2), consisting of an electric motor/gear arrangement (12) having a threaded spindle (13), and
- a control element (15a) which is arranged to be movable and displaceable relative to the roll-over body (2) and which is in operative connection with the second locking element (9, 9a) in such a manner that, during continuous movement of the roll-over body (2), the locking arrangement is unlocked and, after the roll-over body (2) has reached its upper end position, unlocking can be automatically cancelled, and in such a manner that, upon reversing of the roll-over body (2) when extended into the upper end position, the locking arrangement can be automatically unlocked again,
**characterised in that** a cross-piece (4) which is movably held in the guide body (1) and on which the lower end of the driving pressure spring (3) is supported and to which the actuator (5) with its release system (6) is fastened, is provided and which is in driving operative connection with the second drive arrangement (12, 13), and the control element, in the form of a control cam (15a), is coupled to the cross-piece (4) in such a manner as to be axially displaceable relative to the roll-over body.

2. A roll-over protection system according to claim 1, **characterised in that** the control cam (15a) is fixedly mounted on a release pusher (15) which has a drive nut (14) for operative engagement with the threaded spindle (13) and which is held in the cross-piece (4) under spring loading and displaceably relative thereto.

3. A roll-over protection system according to claim 1, **characterised in that** the cross-piece (4) has a threaded bore (14a) for operative engagement with the threaded spindle ( 13), the control cam (15a) is fixedly mounted on the cross-piece (4) and the locking body (7) is displaceably held in the roll-over body (2) under spring loading.

4. A roll-over protection system according to claim 2, **characterised in that** a stop (4a) for limiting the relative movement of the release pusher (15) with respect to the cross-piece (4) is mounted on the cross-piece (4).

5. A roll-over protection system according to claim 2 or claim 4, **characterised in that** a stop (15b) for moving the cross-piece (4) along with it during the retraction movement of the roll-over body (2) is formed on the release pusher (15).

6. A roll-over protection system according to any one of claims 1 to 5, **characterised in that** a headrest cushion forming a headrest (2a) is integrally formed on the upper portion of the roll-over body (2).

7. A roll-over protection system according to any one of claims 1 to 5, **characterised in that**, in addition to the roll-over body (2), at least one further elongate, shaped body guided in the outer guide body (1) is fastened to the cross-piece (4) parallel to the roll-over body (2), on which further body a headrest cushion forming the headrest (2a) is integrally formed in the upper region towards an occupant and in front of the inner roll-over body (2).

8. A roll-over protection system according to any one of claims 1 to 7, **characterised in that** the quick-action drive is formed by a pre-loaded driving pressure spring (3) which is supported by one end, the upper end, on the roll-over body (2) and is fixedly connected by its other end, the lower end, to the cross-piece (4).

9. A roll-over protection system according to claim 8, **characterised in that** the lower end of the driving pressure spring (3) is fastened to the actuator (5) or directly to the cross-piece (4).

10. A roll-over protection system according to any one of claims 1 to 9, **characterised in that** a locking pawl (9) having a toothed profile is articulated via a shaft (11) to the roll-over body (2), which locking pawl (9) has a fastening element (9a) for operative engagement with the control cam (15a), and a toothed rack (8) is provided inside the outer guide body (1).

11. A roll-over protection system according to any one of claims 1 to 10, **characterised in that** both the roll-over body (2) and the outer guide body (1) are curved in a circular arc shape and the outer guide body (1) is fastened behind the seat of the vehicle, preferably to the rear wall of the vehicle.

12. A roll-over protection system according to any one of claims 1 to 11, **characterised in that** both the guide body (1) and the roll-over body (2) are in the form of box sections.

## Revendications

1. Système de protection pour véhicules automobiles en cas de retournement du véhicule, conçu individuellement pour chaque siège du véhicule, avec
- un élément de guidage (1) extérieur, monté de façon fixe sur le véhicule,
- un arceau de sécurité (2) intérieur maintenu de façon mobile dans l'élément de guidage (1),
- un dispositif de verrouillage déverrouillable pour empêcher l'arceau de sécurité (2) de rentrer, comprenant un premier élément de verrouillage (8) monté de façon fixe sur le véhicule et un second élément de verrouillage (9, 9a) déverrouillable monté sur l'arceau de sécurité (2), un actionneur (5) pouvant être activé en cas de danger, avec un système de déclenchement (6) qui est en liaison active réversible avec un dispositif de retenue (7) fixé sur l'arceau (2), une première commande rapide sous forme d'un ressort de pression de commande (3) pour déployer l'arceau (2) jusqu'à une position finale supérieure de sécurité verrouillée en cas de danger, une seconde unité de commande pour un déplacement continu de l'arceau (2), se composant d'une unité moteur électrique/engrenage (12) avec une broche filetée (13) et un organe de commande (15a) mobile monté de façon à coulisser par rapport à l'arceau (2), qui est en engrènement actif avec le second élément de verrouillage (9, 9a), de manière que, lorsque l'arceau (2) se déplace en continu, le dispositif de verrouillage est déverrouillé et qu'après que l'arceau (2) a atteint sa position finale supérieure le déverrouillage soit neutralisé et aussi de manière que, lorsque l'arceau (2) sorti revient de sa position finale supérieure, le dispositif de verrouillage soit de nouveau déverrouillable automatiquement,
**caractérisé en ce qu'**il prévoit une traverse (4) maintenue mobile dans l'élément de guidage (1), sur laquelle vient s'appuyer l'extrémité inférieure du ressort de pression de commande (3), et sur laquelle est fixé l'actionneur (5) avec son système de déclenchement (6) et qui est aussi en liaison de commande active avec la seconde unité de commande (12, 13) et **en ce que** l'organe de commande sous la forme d'une came de commande (15a) est couplé avec la traverse (4) de manière à se déplacer axialement par rapport à l'arceau.

2. Système de protection en cas de retournement selon la revendication 1, **caractérisé en ce que** la came de commande (15a) est montée de façon fixe sur un coulisseau de déclenchement (15) qui possède un écrou d'entraînement (14) pour l'engrènement actif avec la broche filetée (13) et qui est maintenu dans la traverse (4) en se déplaçant par rapport à celle-ci sous l'action d'un ressort.

3. Système de protection en cas de retournement selon la revendication 1, **caractérisé en ce que** la traverse (4) possède un orifice taraudé (14a) pour l'engrènement actif avec la broche filetée (13), la came de commande (15a) est montée de façon fixe sur la traverse (4) et l'élément de verrouillage (7) est maintenu mobile dans l'arceau (2) sous l'action d'un ressort.

4. Système de protection en cas de retournement selon la revendication 2, **caractérisé en ce que** la traverse (4) est dotée d'une butée (4a) pour limiter le mouvement relatif du coulisseau de déclenchement (15) par rapport à la traverse (4).

5. Système de protection en cas de retournement selon la revendication 2 ou 4, **caractérisé en ce que** le coulisseau de déclenchement (15) comporte une butée (15b) destinée à entraîner la traverse (4) lors d'un mouvement de rentrée de l'arceau (2).

6. Système de protection en cas de retournement selon les revendications 1 à 5, **caractérisé en ce que**, sur la partie supérieure de l'arceau (2), on a façonné un coussin appuie-tête servant d'appuie-tête (2a).

7. Système de protection en cas de retournement selon les revendications 1 à 5, **caractérisé en ce que**, à côté de l'arceau (2) et parallèle à celui-ci, on a fixé sur la traverse (4) au moins une autre pièce façonnée allongée, se déplaçant dans l'élément de guidage extérieur (1), et sur la partie supérieure de laquelle, du côté du passager et devant l'arceau intérieur (2), on a façonné un coussin appuie-tête servant d'appuie-tête (2a).

8. Système de protection en cas de retournement selon les revendications 1 à 7, **caractérisé en ce que** la commande rapide est constituée par un ressort de pression de commande (3) qui repose, par l'une de ses extrémités, la supérieure, sur l'arceau (2) et qui est relié de façon fixe, par son autre extrémité, inférieure, à la traverse (4).

9. Système de protection en cas de retournement selon la revendication 8, **caractérisé en ce que** l'extrémité inférieure du ressort de pression de commande (3) est fixé sur l'actionneur (5) ou directement sur la traverse (4).

10. Système de protection en cas de retournement selon les revendications 1 à 9, **caractérisé en ce qu'**un cliquet (9) à profil denté est monté articulé sur l'arceau (2) au moyen d'un arbre (11), lequel cliquet présente un élément de fixation (9a) pour l'engrènement actif avec la came de commande (15a), et **en ce qu'**une tige dentée (8) est prévue à l'intérieur de l'élément de guidage extérieur (1).

11. Système de protection en cas de retournement selon les revendications 1 à 10, **caractérisé en ce que** tant l'arceau (2) que l'élément de guidage extérieur (1) sont coudés en forme d'arc de cercle et que l'élément de guidage (1) derrière le siège du véhicule est de préférence fixé à la paroi postérieure du véhicule.

12. Système de protection en cas de retournement selon les revendications 1 à 11, **caractérisé en ce que** tant l'élément de guidage (1) que l'arceau (2) sont réalisés en profilés à section rectangulaire.
